# EUROPEAN PATENT APPLICATION

(11) **EP 4 753 042 A1**
(43) Date of publication of application: **03.06.2026**
(21) Application number: 25203100.0
(22) Date of filing: 18.09.2025
(51) Int. Cl.: H01M 50/213, H01M 10/6567, H01M 10/659, H01M 50/107, H01M 50/258, H01M 50/264

(54) **SECONDARY BATTERY**

(30) Priority: 29.11.2024 KR 20240175622
(71) Applicant: SK On Co., Ltd., Seoul 03161 (KR)
(72) Inventor: PAIK, Hyung Ju, 34124 Daejeon (KR); LEE, Jung Kwan, 34124 Daejeon (KR); JEON, Hae Ryong, 34124 Daejeon (KR); KWAK, Seung Il, 34124 Daejeon (KR); LEE, Dong Gu, 13558 Seongnam-si, Gyeonggi-do (KR)
(74) Representative: Stolmár & Partner Patentanwälte PartG mbB

(57) **Abstract**

A secondary battery is disclosed. According to one aspect of the present disclosure, there is provided a secondary battery comprising a cell assembly comprising battery cells, first and second frames coupled to the battery cells, and a case accommodating the battery cells and the first and second frames, and a housing in which one or more cell assemblies are accommodated, wherein the battery cells are combined with the first frame to form cell units and the cell units are connected to each other by the second frame.

## Description

### BACKGROUND

### 1. Field of the Invention

Embodiments of the present disclosure relate to a secondary battery.

### 2. Discussion of Related Art

A secondary battery is one of the energy storage means which can be charged and discharged through electrochemical reactions. The secondary battery may be utilized in various fields in which electrical energy is used. For example, secondary batteries are widely utilized in mobile devices such as a cell phone, a notebook, a tablet, and the like, and are being explored for wider utilization in the field of transportation means such as vehicles, aircraft, ships, and the like. Further, demand for secondary batteries is increasing in the field of energy storage systems (ESSs) for utilizing surplus electricity.

Such secondary batteries are widely used for driving or energy storage in medium and large-sized devices such as electric vehicles or ESSs as well as small devices such as portable electronic devices. In addition, in order to improve power and/or capacity, one battery module may be configured in a form in which a plurality of battery cells are electrically connected to each other, and a plurality of such modules may be connected to form one battery pack.

Recently, cell-to-pack (CTP) technology, which assembles battery cells directly into packs without modularizing the battery cells, has been proposed. According to the cell-to-pack structure, a module housing is omitted or simplified, and thus the space utilization rate is increased, thereby improving energy density, reducing the number of components and processes, and improving manufacturing efficiency.

### SUMMARY

Embodiments of the present disclosure are directed to providing a secondary battery.

In addition, some embodiments of the present disclosure are directed to providing a secondary battery to which a cell-to-pack structure is applied.

In addition, some embodiments of the present disclosure are directed to providing a secondary battery with improved assembly convenience.

In addition, some embodiments of the present disclosure are directed to providing a secondary battery with improved cooling efficiency.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to an aspect of the present invention, there is provided a secondary battery comprising: a cell assembly comprising battery cells, first and second frames coupled to the battery cells, and a case accommodating the battery cells and the first and second frames; and a housing in which one or more cell assemblies are accommodated, wherein the battery cells are combined with the first frame to form a cell unit and the cell units are connected to each other by the second frame.

In some embodiments, the case may be provided so that an inner side surface thereof is supported by the first and second frames.

In some embodiments, some of the first frames may be lower frames supporting lower portions of the battery cells and the remaining frames may be upper frames supporting upper portions of the battery cells.

In some embodiments, the second frame may be coupled to the battery cell between the lower frame and the upper frame.

In some embodiments, the inside of the housing may be filled with a filler.

In some embodiments, insulating oil may be accommodated in the housing, and the battery cells may be immersed in the insulating oil.

In some embodiments, the battery cells may be disposed in a plurality of rows.

In some embodiments, adjacent rows of battery cells may be disposed in a staggered manner.

In some embodiments, the cell unit and the second frame may be rotatably coupled to each other.

In some embodiments, the first frame may be provided with an insertion hole into which the battery cell is inserted.

In some embodiments, a plurality of insertion holes may be provided and arranged in a row.

In some embodiments, an inner side surface of the insertion hole may have a convexly protruding shape.

In some embodiments, the battery cell may be press-fitted into the insertion hole.

In some embodiments, the second frame may be provided with a pair of coupling portions coupled to the cell unit.

In some embodiments, the coupling portion may comprise a coupling hole into which the battery cell is inserted.

In some embodiments, an inner side surface of the coupling hole may have a convexly protruding shape.

In some embodiments, the battery cell may be press-fitted into the coupling hole.

In some embodiments, the coupling portions of the second frame may be a pair of elastic pieces supporting a side surface of the battery cell.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic perspective view of a battery cell according to one embodiment of the present disclosure;
FIG. 2 is a schematic perspective view of an electrode assembly according to one embodiment of the present disclosure;
FIG. 3 is a view schematically illustrating a state in which the electrode assembly of FIG. 2 is wound around a central axis;
FIG. 4 is a view illustrating a state in which electrode tabs at upper and lower ends in the electrode assembly wound as illustrated in FIG. 3 have undergone a flattening process;
FIG. 5 is a schematic perspective view of a secondary battery according to one embodiment of the present disclosure;
FIG. 6 is a schematic perspective view of a cell assembly according to one embodiment of the present disclosure;
FIG. 7 is a cross-sectional view taken along line A-A of the cell assembly of FIG. 6;
FIG. 8 is a perspective view of an electrical connection structure of the cell assembly according to one embodiment of the present disclosure;
FIG. 9 is a perspective view illustrating a state in which cell units are stacked according to one embodiment of the present disclosure;
FIG. 10 is a perspective view illustrating a part of a state in which the cell units of FIG. 9 is unfolded;
FIG. 11 is a perspective view illustrating a stacking method of the cell units of FIG. 9;
FIG. 12 is a perspective view illustrating a method of coupling the cell unit and the second frame of FIG. 9;
FIG. 13 is a cross-sectional view of a cell unit and a second frame according to another embodiment of the present disclosure; and
FIG. 14 is a perspective view illustrating a method of coupling a cell unit and a second frame according to still another embodiment of the present disclosure.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

First, secondary batteries according to embodiments of the present disclosure will be described.

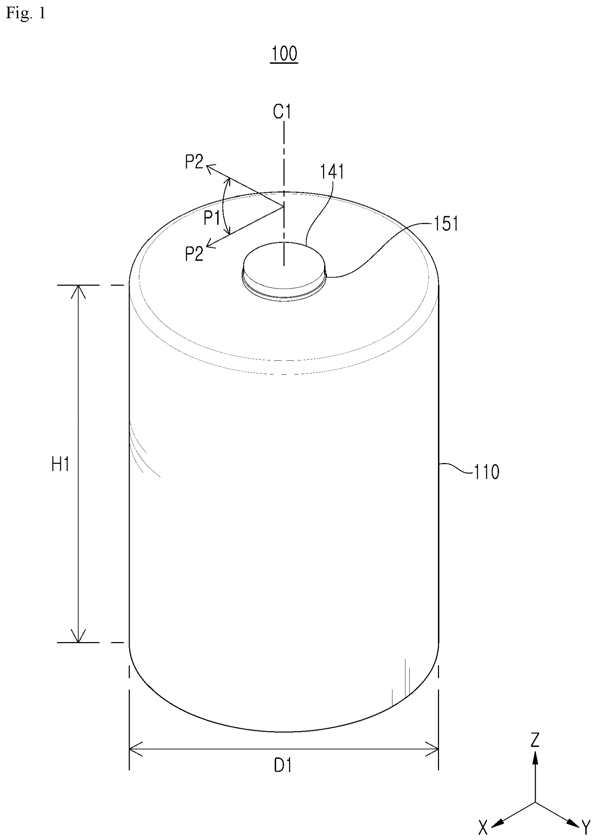

FIG. 1 is a schematic perspective view of a secondary battery according to one embodiment of the present disclosure.

Hereinafter, for convenience, a rotation direction around a central axis C1 shown in FIG. 1 is referred to as a circumferential direction P1, an inward-outward direction toward/from the central axis C1 in a plane perpendicular to the central axis C1 is referred to as a radial direction P2, and an up-down direction along the central axis C1 is referred to as a vertical direction.

Referring to FIG. 1, in some embodiments, a battery cell 100 may comprise a can 110. The can 110 may comprise an inner space in which an electrode assembly 120 is accommodated. In some embodiments, the can 110 may have an upper surface 111 and a side surface 112, and may have a cylindrical shape with an open lower portion. Although not illustrated, the opening at the lower portion of the can 110 may be provided to be appropriately closed by a cap plate or the like.

In some embodiments, a rivet 113 may be provided on the upper surface 111 of the can 110. The rivet 113 may function as one electrode terminal. For example, the rivet 113 may function as a positive electrode terminal. In the above, the remaining area of the can 110 excluding the rivet 113 may function as the other electrode terminal corresponding to the rivet 113. For example, the remaining area of the upper surface 111 of the can 110 excluding the rivet 113 may function as a negative electrode terminal. In some embodiments, a gasket for electrical insulation and mechanical sealing may be provided between the rivet 113 and the can 110.

In some embodiments, the can 110 may be provided in a cylindrical shape having a predetermined diameter D1 and height H1. In other words, the battery cell 100 may be provided in the cylindrical shape having the predetermined diameter D1 and height H1. For example, the battery cell 100 may have a diameter of 46 mm and a height of 80 mm. In some cases, the battery cell 100 having such a form factor may be referred to as a '4680 battery.' As another example, the battery cell 100 may have a diameter of 46 mm and a height of 80 mm, a diameter of 46 mm and a height of 95 mm, or a diameter of 46 mm and a height of 110 mm. In some cases, the battery cell 100 having such a form factor may be referred to as a '46xx battery.' In the '46xx', 'xx' may describe a height of the corresponding form factor. As still another example, the battery cell 100 may have a diameter of 48 mm and a height of 75 mm, a diameter of 48 mm and a height of 80 mm, or a diameter of 48 mm and a height of 110 mm. In some cases, the battery cell 100 having the form factor may be referred to as a '48xx battery.' In the '48xx', 'xx' may describe a height of the corresponding form factor. However, in the present disclosure, the diameter D1 and the height H1 of the battery cell 100 may be variously changed, and are not necessarily limited to those exemplified above.

Meanwhile, although the cylindrical battery cell 100 is illustrated in the present description, the form factor of the battery cell 100 according to the embodiments of the present disclosure is not necessarily limited to the exemplified cylindrical type. The battery cell 100 according to the embodiments of the present disclosure may be variously implemented or applied as a coin type, a prismatic type, a pouch type, or other atypical shapes within the scope comprising the technical idea to be described below.

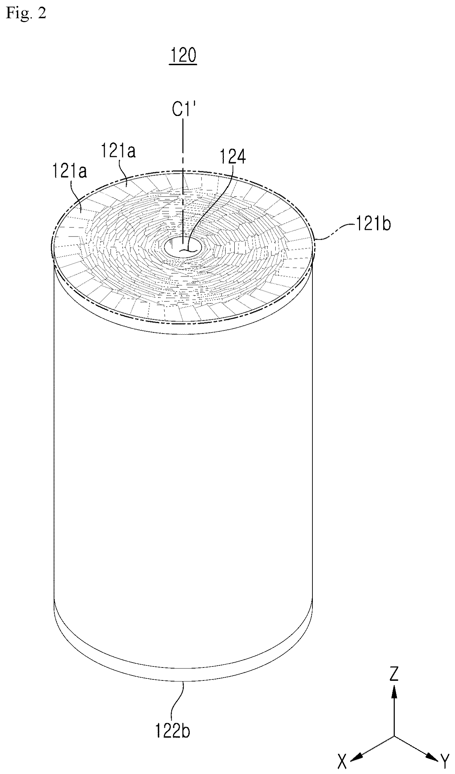

FIG. 2 is a schematic perspective view of an electrode assembly according to one embodiment of the present disclosure.

Referring to FIG. 2, in some embodiments, the battery cell 100 may comprise the electrode assembly 120. The electrode assembly 120 may be accommodated in the can 110 as described above. In some embodiments, the electrode assembly 120 may be wound around the central axis C1 to be provided in the form of a cylindrical roll. Such a roll-shaped electrode assembly 120 may be referred to as a jelly roll or the like in the art.

In some embodiments, the electrode assembly 120 may comprise bonding surfaces 121e and 122e at one or both end portions in a direction of the central axis C1. That is, the electrode assembly 120 may comprise the bonding surfaces 121e and 122e at upper and/or lower end portions, respectively. In the illustrated embodiment, the bonding surfaces 121e and 122e are provided at the upper and lower end portions of the electrode assembly 120, respectively. Hereinafter, for convenience, the bonding surface 121e provided at the upper end of the electrode assembly 120 is referred to as a first bonding surface 121e, and the bonding surface 122e provided at the lower end of the electrode assembly 120 is referred to as a second bonding surface 122e.

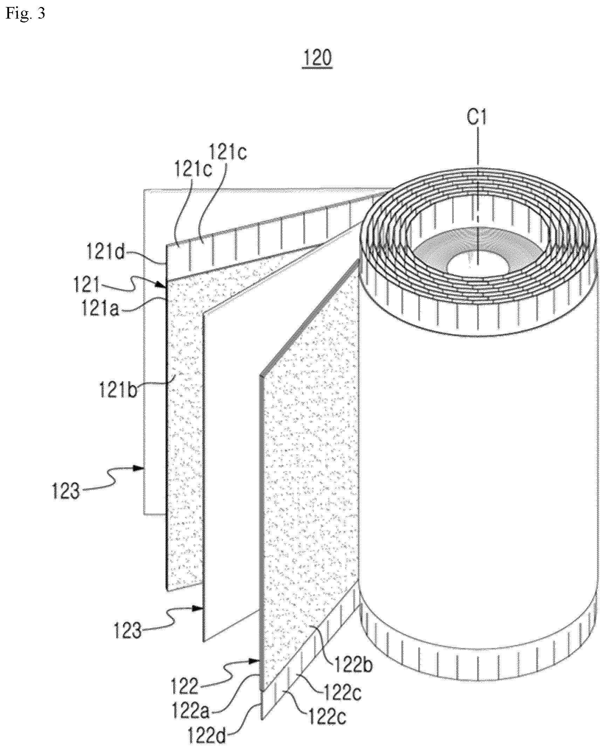

In the above, a plurality of electrode tabs 121c and 122c may be bent toward the central axis C1 at each of the bonding surfaces 121e and 122e. That is, the first bonding surface 121e may have a plurality of first electrode tabs 121c that are bent toward the central axis C1 at the upper end of the electrode assembly 120, and the second bonding surface 122e may have a plurality of second electrode tabs 122c that are bent toward the central axis C1 at the lower end of the electrode assembly 120 (see FIG. 3). In other words, the first bonding surface 121e may be provided as a schematic surface formed by the plurality of bent first electrode tabs 121c, and the second bonding surface 122e may be provided as a schematic surface formed by the plurality of bent second electrode tabs 122c.

In the battery cell 100, the plurality of electrode tabs 121c and 122c may form predetermined bonding surfaces 121e and 122e, and may be electrically connected to an electrode terminal through the bonding surfaces 121e and 122e. That is, in the battery cell 100, a lead tab is omitted, and each bonding surface 121e and 122e may replace the function of the lead tab. In some cases, such a battery cell 100 may be referred to as a tabless battery or the like.

In some embodiments, each of the bonding surfaces 121e and 122e as described above may be bonded to a current collector plate or a cap plate. For example, the first bonding surface 121e may be welded to the current collector plate at the upper end of the electrode assembly 120, and the second bonding surface 122e may be welded to the other current collector plate at the lower end of the electrode assembly 120. As another example, the first bonding surface 121e may be welded to the current collector plate at the upper end of the electrode assembly 120, and the second bonding surface 122e may be welded to the cap plate at the lower end of the electrode assembly 120. Accordingly, the bonding surfaces 121e and 122e may be electrically connected to the current collector plate or the cap plate.

FIG. 3 is a view schematically illustrating a state in which the electrode assembly of FIG. 2 is wound around the central axis.

Referring to FIG. 3, in some embodiments, the electrode assembly 120 may comprise a first electrode 121 and a second electrode 122 with a separator 123 interposed therebetween. The first electrode 121 and/or the second electrode 122 may be electrodes manufactured by an electrode manufacturing device 200. The separator 123 and the first and second electrodes 121 and 122 may be wound around the central axis C1. The first electrode 121 may function as a positive electrode or a negative electrode, and the second electrode 122 may function as a negative electrode or a positive electrode corresponding thereto. In the present description, it is assumed that the first electrode 121 is a positive electrode and the second electrode 122 is a negative electrode.

In some embodiments, the first electrode 121 and the second electrode 122 may respectively comprise metal foils 121a and 122a wound around the central axis C1, active materials 121b and 122b provided on at least one surfaces of the metal foils 121a and 122a, and a plurality of electrode tabs 121c and 122c provided in one end portion areas of the metal foils 121a and 122a along the direction of the central axis C1 and bent toward the central axis C1. For convenience, in the following, the metal foil 121a, the active material 121b, and the electrode tab 121c corresponding to the first electrode 121 will be referred to as a first metal foil 121a, a first active material 121b, and a first electrode tab 121c, respectively, and the metal foil 122a, the active material 122b, and the electrode tab 122c corresponding to the second electrode 122 will be referred to as a second metal foil 122a, a second active material 122b, and a second electrode tab 122c, respectively.

In some embodiments, the first electrode 121 may comprise the first metal foil 121a. For example, the first metal foil 121a may comprise aluminum, stainless steel, nickel, titanium, alloys thereof, or the like. In addition, the first electrode 121 may comprise the first active material 121b provided on at least one surface of the first metal foil 121a. In some embodiments, the first active material 121b may comprise a compound capable of reversibly intercalating and deintercalating lithium ions. For example, the first active material 121b may comprise a lithium-nickel metal oxide, and in some cases, the lithium-nickel metal oxide may further comprise cobalt, manganese, aluminum, and the like.

Similarly, in some embodiments, the second electrode 122 may comprise the second metal foil 122a. For example, the second metal foil 122a may comprise copper, stainless steel, nickel, titanium, alloys thereof, or the like. In addition, the second electrode 122 may comprise the second active material 122b provided on at least one surface of the second metal foil 122a. In some embodiments, the second active material 122b may comprise a compound capable of reversibly intercalating and deintercalating lithium ions. For example, the second active material 122b may comprise a carbon-based material such as crystalline carbon, amorphous carbon, a carbon composite, and a carbon fiber. Alternatively, the second active material 122b may comprise lithium metal, a lithium alloy, a silicon-containing material, a tin-containing material, or the like.

The separator 123 may be provided between the first electrode 121 and the second electrode 122. The separator 123 may be provided to limit an electrical short circuit between the first and second electrodes 121 and 122 and generate a flow of ions. In some embodiments, the separator 123 may comprise a porous polymer film, a porous nonwoven fabric, or the like. For example, the porous polymer film may comprise a polyolefin-based polymer such as an ethylene polymer, a propylene polymer, an ethylene/butene copolymer, an ethylene/hexene copolymer, and an ethylene/methacrylate copolymer. In addition, the porous nonwoven fabric may comprise high melting point glass fibers, polyethylene terephthalate fibers, and the like.

Meanwhile, in some embodiments, the first electrode 121 may comprise the first electrode tab 121c. In the illustrated embodiment, the first electrode tab 121c is provided at an upper end portion of the first electrode 121. As described above, a plurality of first electrode tabs 121c may be provided, and the plurality of first electrode tabs 121c may be disposed in a direction in which the first electrode 121 is wound. In addition, the first electrode tab 121c may be provided in an upper end area of the first metal foil 121a in which the coating of the first active material 121b is omitted. In other words, the first electrode 121 may comprise a first uncoated portion 121d, in which the first active material 121b is not applied, and the first electrode tab 121c may be provided in the first uncoated portion 121d.

Similarly, in some embodiments, the second electrode 122 may comprise the second electrode tab 122c. In the illustrated embodiment, the second electrode tab 122c is provided at a lower end portion of the second electrode 122. The second electrode tab 122c may be provided in a second uncoated portion 122d where the second active material 122b is not applied, and a plurality of second electrode tabs 122c may be provided.

Meanwhile, the separator 123 may be provided between the first electrode 121 and the second electrode 122 as described above. In some embodiments, an upper end portion of the separator 123 may be disposed between the first electrode tab 121c and an upper end of the second electrode 122. The upper end portion of the separator 123 may function to electrically insulate the first electrode tab 121c from the second electrode 122. Similarly, a lower end portion of the separator 123 may be disposed between a lower end of the first electrode 121 and the second electrode tab 122c. The lower end portion of the separator 123 may function to electrically insulate the first electrode 121 from the second electrode tab 122c.

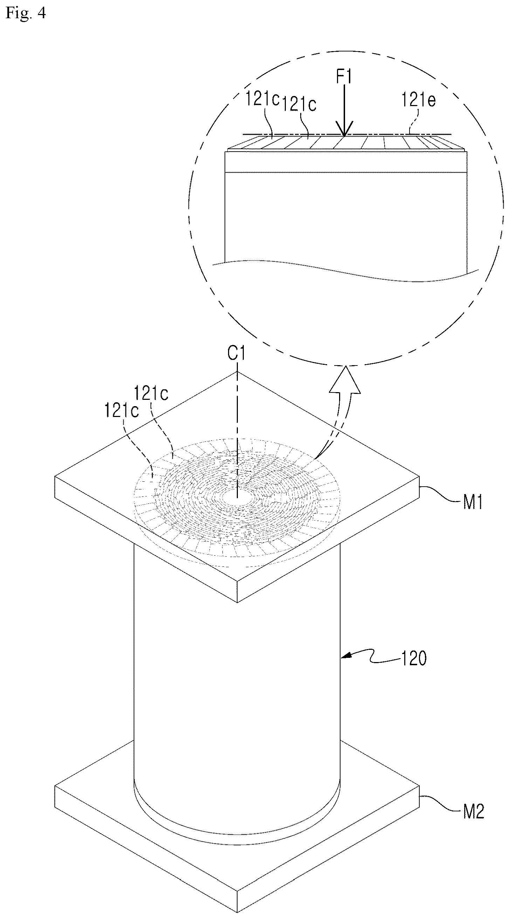

FIG. 4 is a view illustrating a state in which electrode tabs at the upper and lower ends in the electrode assembly wound as illustrated in FIG. 3 have undergone a flattening process.

Referring to FIG. 4, the electrode assembly 120 wound as shown in FIG. 3 may undergo a flattening process in which the first and second electrode tabs 121c and 122c are bent toward the central axis C1 and the bent first and second electrode tabs 121c and 122c are pressed up and down. In the flattening process, the first and second electrode tabs 121c, 122c may be pressed (F1) through predetermined pressing devices M1, M2, respectively, thereby causing the first and second electrode tabs 121c and 122c to form the first and second bonding surfaces 121e and 122e as shown in FIG. 2. Thereafter, a current collector, a cap plate, or the like may be appropriately bonded to the first and second bonding surfaces 121e and 122e, respectively. For example, a current collector may be disposed on the first bonding surface 121e, and the current collector may be welded to the first bonding surface 121e by laser welding.

Next, secondary batteries according to embodiments of the present disclosure will be described.

Meanwhile, the x, y, and z directions mentioned below are intended to explain the present disclosure so that it can be clearly understood, and it goes without saying that each direction may be defined differently depending on where the reference is placed.

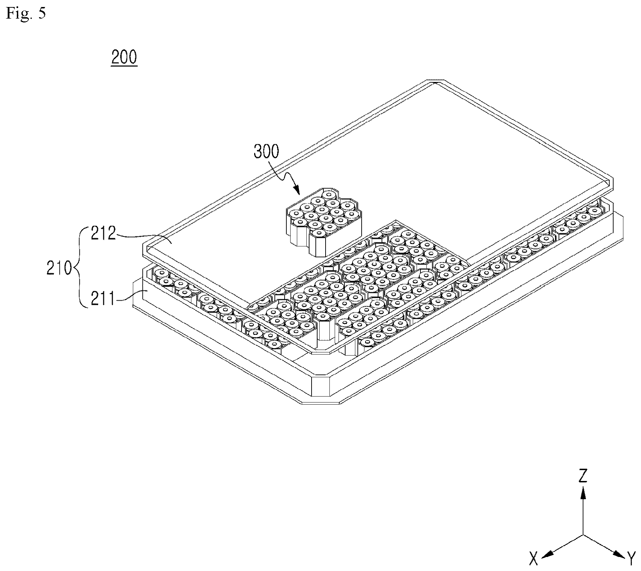

FIG. 5 is a schematic perspective view of a secondary battery according to one embodiment of the present disclosure.

Referring to FIG. 5, in some embodiments, the secondary battery 200 may comprise a cell assembly 300 and a housing 210 in which one or more cell assemblies 300 are accommodated. The cell assembly 300 may comprise a battery cell 100, first and second frames 310 and 320, and a case 330. A plurality of battery cells 100 may be provided and coupled to the first and second frames 310 and 320, and the combined battery cells 100 and first and second frames 310 and 320 may be accommodated in the case 330. One or more cell assemblies 300 may be accommodated in the housing 210, for example, 24 cell assemblies 300 may be accommodated as illustrated in the drawing. In addition, the cell assembly 300 comprises a plurality of battery cells 100, for example, as illustrated in the drawing, one cell assembly 300 may comprise 16 battery cells 100. That is, the secondary battery 200 illustrated in FIG. 5 comprises a total of 384 battery cells 100. The total number of battery cells 100 comprised in the secondary battery 200 of the present disclosure may be appropriately adjusted in consideration of required power, battery cell capacity, form factor, and the like, and accordingly, the number of battery cells 100 comprised in each cell assembly 300 and the number of cell assemblies 300 accommodated in the housing 210 may be appropriately designed.

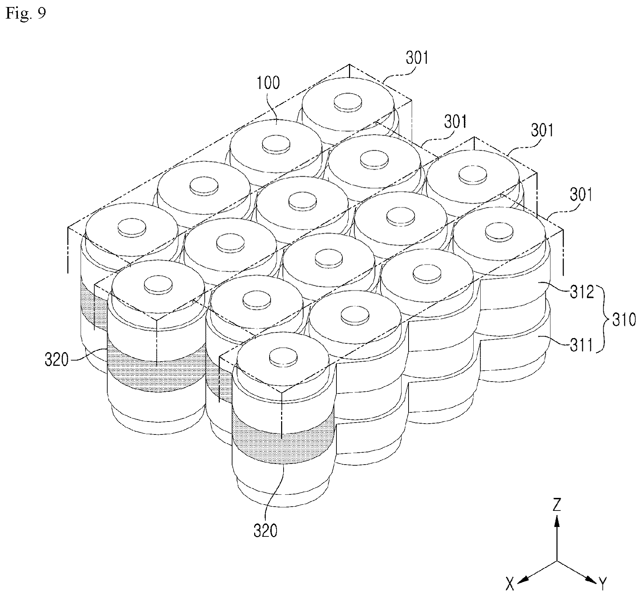

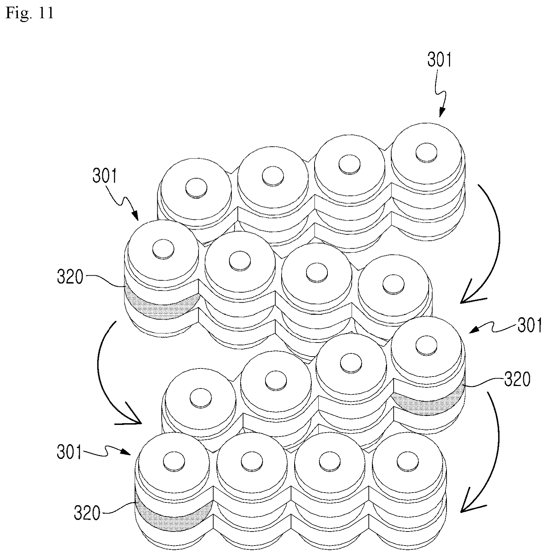

Meanwhile, in some embodiments, the battery cells 100 are combined with the first frames 310 to form cell units 301, and the cell units 301 may be connected to each other by the second frame 320 (see FIG. 9). Furthermore, in some embodiments, the cell unit 301 and the second frame 320 may be rotatably coupled to each other, as will be described in detail below. That is, the second frame 320 is provided to connect two cell units 301, and the second frame 320 may be rotatably coupled to the cell units 301 on both sides. This coupling is repeated, and the plurality of cell units 301 may be connected to each other like a joint by the second frame 320. In addition, the plurality of cell units 301 may be stacked by rotating around the coupling portion with the second frame 320 (see FIG. 11). According to the repeated connection structure of the cell unit 301 and the second frame 320, the number of battery cells 100 comprised in one cell unit 301 and the number of cell units 301 are appropriately set, and secondary batteries having various specifications may be produced.

In some embodiments, the first and second frames 310 and 320 and the case 330 may be formed of an insulating material. Inside the cell assembly 300, the battery cells 100 are disposed to be spatially separated from each other while being coupled by the first and second frames 310 and 320, and since the first and second frames 310 and 320 are made of an insulating material, a short circuit between the battery cells 100 may be prevented. Furthermore, since the case 330 accommodating the cell assembly 300 is made of an insulating material, a short circuit between the cell assemblies 300 may be prevented. In some embodiments, the first and second frames 310 and 320 and the case 330 may be formed of plastic. In some embodiments, the first and second frames 310 and 320 and the case 330 may be injection-molded. Meanwhile, the electrical connection structure between the battery cells 100 in the cell assemblies 300 and the electrical connection structure between the cell assemblies 300 will be described below.

In some embodiments, the housing 210 may comprise a main body 211 and a cover 212. The main body 211 may provide an accommodation space in which one or more cell assemblies 300 may be accommodated. In the main body 211, the accommodation space is open at one side (e.g., an upper side) to accommodate one or more cell assemblies 300, and the cover 212 may cover the one open side of the accommodation space.

In some embodiments, the housing 210 may comprise a cooling system (not shown) for cooling the battery cell 100. The structure of the cooling system is not particularly limited, but for example, a cooling flow path through which cooling water flows may be installed in the accommodation space of the main body 211 to cool the cell assembly 300. Alternatively, as will be described in detail below, insulating oil is accommodated in the housing 210 so that the entire battery cell 100 is immersed, and the cooling system may be a system for cooling and circulating the insulating oil.

In some embodiments, the secondary battery 200 may be a battery pack having a cell-to-pack structure. The cell-to-pack structure is a structure for omitting or simplifying a structure for modularizing a battery cell, and the secondary battery 200 according to the present disclosure may be a battery pack having a cell-to-pack structure in which the battery cell 100 and the cell assembly 300 comprising the case 330 in which the battery cell 100 is accommodated are directly accommodated in the housing 210. Therefore, the space utilization rate may be increased, thereby improving energy density, reducing the number of components and processes, and improving manufacturing efficiency.

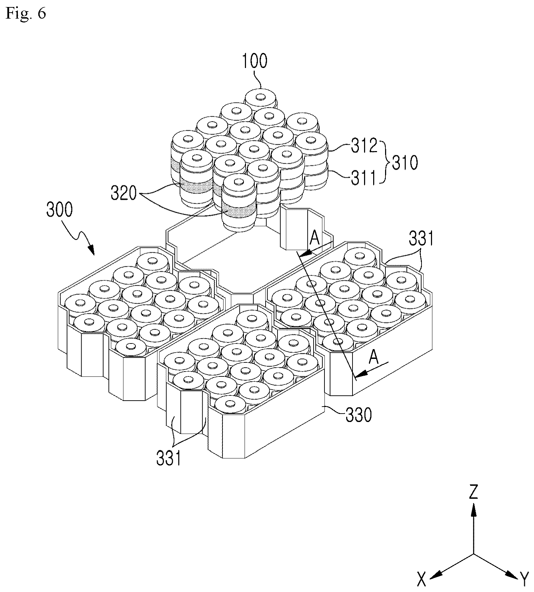

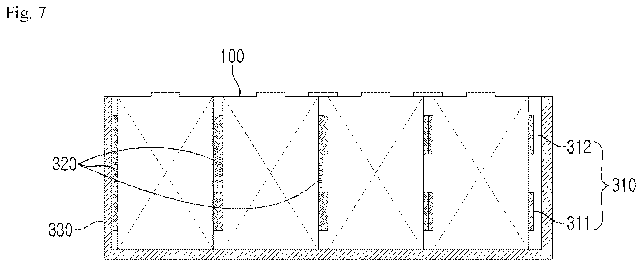

FIG. 6 is a schematic perspective view of a cell assembly according to one embodiment of the present disclosure, and FIG. 7 is a cross-sectional view taken along line A-A of the cell assembly of FIG. 6.

Referring to FIGS. 6 and 7, in some embodiments, the case 330 accommodating the battery cell 100 and the first and second frames 310 and 320 may be provided with a structure that allows adjacent cases to interlock with each other. For example, the case 330 is provided with a protruding and recessed structure 331 on at least a portion of the outer surface, so that the protruding and recessed structures 331 of adjacent cases may interlock with each other. In the drawing, it is exemplified that the protruding and recessed structures 331 are provided on both side surfaces of the case 330 in the x direction, so that adjacent cases in the x direction interlock with each other. Due to the interlocking structure between the cases 330, a support force between the cell assemblies 300 accommodated in the housing 210 is reinforced, thereby improving structural stability.

In some embodiments, the case 330 may be provided such that an inner side surface thereof is supported by the first and second frames 310 and 320. The case 330 and the first and second frames 310 and 320 are supported by each other, and an empty space inside the case 330 is minimized and energy density may be secured. In addition, as described above, the cell units 301 connected by the second frame 320 are stacked and inserted into the case 330, and the inner side surface of the case 330 is supported by the first and second frames 310 and 320 and the rotation between the cell unit 301 and the second frame 320 is restricted, so that a stacked form of the cell units 301 may be fixed. By stacking the cell units 301, inserting the cell units 301 into the case 330, and fixing its form, the convenience in assembling the cell assembly 300 may be improved, and the support and fixing of the battery cell 100 may be easily performed.

In some embodiments, some of the first frames 310 may be lower frames 311 supporting lower portions of the battery cells 100, and the remainder may be upper frames 312 supporting upper portions of the battery cells 100. That is, the first frame 310 may comprise the lower frame 311 and the upper frame 312. The lower frame 311 and the upper frame 312 may be spaced apart from each other in the vertical direction, that is, in the z direction. As the lower frame 311 and the upper frame 312 are vertically spaced apart from each other and are combined with the battery cells 100, the structural stability of the cell unit 301 may be secured while minimizing the volume and weight of the first frame 310. In addition, a contact area between the battery cell 100 and the first and second frames 310 and 320 may be minimized. In addition, as will be described below, when insulating oil is accommodated in the housing 210, a contact area between the insulating oil and the battery cell 100 may increase and the cooling efficiency of the battery cell 100 may be improved.

In some embodiments, the second frame 320 may be coupled to the battery cell 100 between the lower frame 311 and the upper frame 312. That is, as will be described in detail below, in some embodiments, the second frame 320 may each comprise a coupling portion 321 rotatably coupled to the cell unit 301, and the coupling portion 321 may be coupled to the battery cell 100 between the lower frame 311 and the upper frame 312.

In some embodiments, the inside of the housing 210 may be filled with a filler. That is, after one or more cell assemblies 300 are accommodated in the accommodation space of the housing 210, the filler may be filled. The filler may be filled in the housing 210 and then cured to fix the cell assembly 300 to the housing 210. The filler may be, for example, a foamed urethane-based material. The filler may be filled in the space between the cell assemblies 300 inside the housing 210 and may also be filled in the space between the case 330, the battery cell 100, and the first and second frames 310 and 320 inside the cell assembly 300.

In some embodiments, insulating oil may be accommodated in the housing 210, and the battery cell 100 may be immersed in the insulating oil. The entire battery cell 100 may be immersed in the insulating oil in the housing 210, and a cooling system for circulating and cooling the insulating oil may be provided in the housing 210, so that the insulating oil may be circulated and the battery cell 100 may be cooled. The insulating oil is a fluid having insulating performance, and may be any one of hydrofluoroether, fluoroketone, and ethylene glycol. The main body 211 may be provided with an inlet port and an outlet port connected to the accommodation space, and the insulating oil may circulate through the inlet/outlet port to cool the battery cell 100. The cooling system may comprise a pump for circulating the insulating oil, a chiller for cooling the refrigerant, and a heat exchanger for exchanging heat between the refrigerant and the insulating oil. In addition, the insulating oil accommodated inside the housing 210 may protect the battery cell 100 from external contaminants.

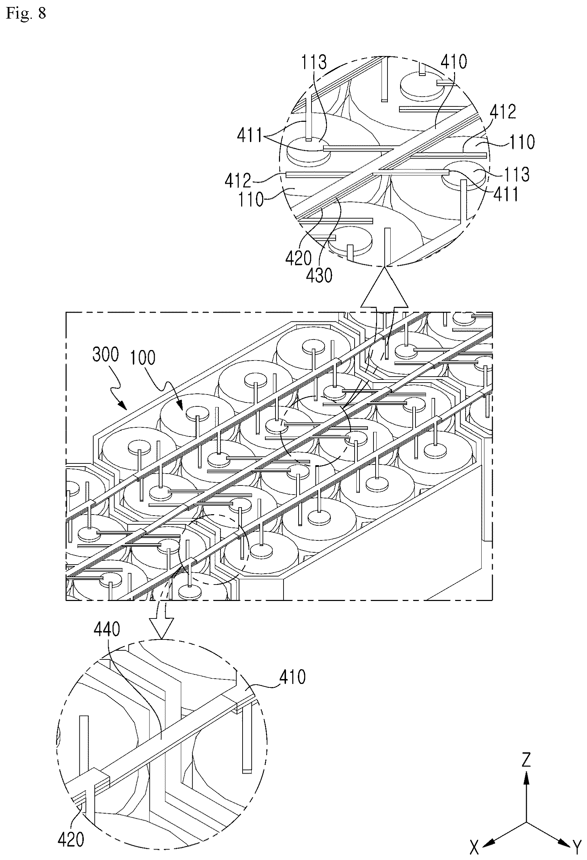

FIG. 8 is a perspective view of an electrical connection structure of the cell assembly according to one embodiment of the present disclosure.

Referring to FIG. 8, in some embodiments, the battery cells 100 of the cell assembly 300 may be electrically connected by a first bus bar 410 and a second bus bar 420. Furthermore, adjacent cell assemblies 300 may be electrically connected by a connection portion 440.

In some embodiments, the first bus bar 410 may be a positive electrode bus bar and comprise a plurality of first branches 411 electrically connected to the rivets 113 of the battery cells 100, respectively. In addition, the second bus bar 420 may be a negative electrode bus bar and comprise a plurality of second branches 412 electrically connected to the cans 110 of the battery cells 100. An insulating portion 430 may be provided between the first bus bar 410 and the second bus bar 420. That is, the battery cells 100 of each cell assembly 300 may be connected in parallel to each other by the first bus bar 410 and the second bus bar 420. In addition, the first bus bar 410 of one cell assembly 300 and the second bus bar 420 of another cell assembly 300 among adjacent cell assemblies 300 are connected to the connection portion 440, and adjacent cell assemblies 300 may be connected in series to each other. One end of the connection portion 440 may be connected to the first bus bar 410 of one cell assembly 300, and the other end thereof may be connected to the second bus bar 420 of the other cell assembly 300. The connection portion 440 and the first and second bus bars 410 and 420 on both sides connected thereto may be integrally provided. The first branch 411 may be welded to the rivet 113, and the second branch 412 and the second bus bar 420 may be welded to the can 110. However, the electrical connection structure by the first and second bus bars 410 and 420 is merely exemplary, and the electrical connection structure of the battery cell 100 and the cell assembly 300 may also have other structures.

FIG. 9 is a perspective view illustrating a state in which cell units are stacked according to one embodiment of the present disclosure.

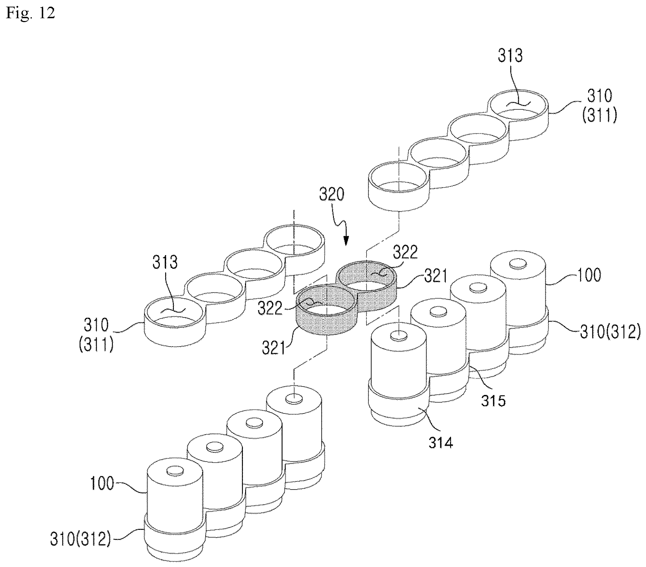

Referring to FIG. 9, in some embodiments, the battery cells 100 are combined with the first frames 310 to form the cell units 301, and the cell units 301 may be connected to each other by the second frame 320. As an example, an embodiment in which four cell units 301 are sequentially connected by the second frame 320 is illustrated in the drawing. The cell unit 301 has a structure in which the battery cell 100 is combined with the first frame 310, and each cell unit 301 may comprise the same number of battery cells 100. The shape of the first frame 310 is not particularly limited, but may be provided with an insertion hole 313 into which the battery cell 100 is inserted as described in detail below (see FIG. 12). Furthermore, the battery cells 100 provided in the first frame 310 may be spaced apart at regular intervals. The cell units 301 may be connected and stacked by the second frame 320, and as described above, the inner side surface of the case 330 is supported by the first and second frames 310 and 320, and the shape of the stacked cell units 301 may be maintained and stability may be secured.

In some embodiments, the battery cells 100 may be disposed in a plurality of rows. The plurality of battery cells 100 comprised in the cell assembly 300 may be disposed in a plurality of rows. The battery cells 100 form one row at regular intervals in the x-direction, and a plurality of such rows may be disposed in the y-direction. The battery cells 100 provided in each cell unit 301 form one row in the x-direction, and a plurality of cell units 301 may be disposed in the y-direction. Adjacent cell units 301 may be supported by outer surfaces of the first frames 310.

In some embodiments, the battery cells 100 may be arranged such that adjacent rows are staggered. One row of battery cells 100 and the row adjacent thereto may be alternately disposed in the x-direction. Accordingly, the y-direction spacing between adjacent rows may be reduced, and energy density may be improved. That is, the cell units 301 adjacent to each other in the y-direction may be arranged in a staggered manner in the x-direction. Meanwhile, as will be described in detail below, the first frame 310 may be provided with the insertion hole 313 into which the battery cell 100 is inserted, and a plurality of insertion holes 313 may be provided, and a convexly protruding portion 314 and a concavely recessed portion 315 may be repeatedly provided on the side surface of the first frame 310 (see FIG. 12). As a result, when the cell units 301 are stacked, the protruding portion 314 and the recessed portion 315 are supported in a form in which they interlock, and adjacent cell units 301 may be naturally arranged to be staggered in the x-direction.

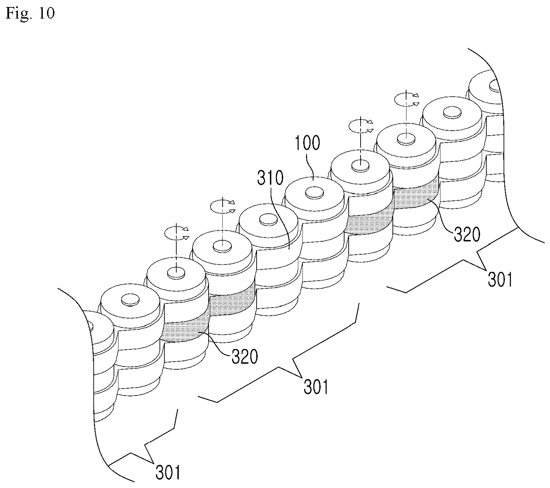

FIG. 10 is a perspective view illustrating a part of a state in which the cell units of FIG. 9 is unfolded.

Referring to FIG. 10, in some embodiments, the cell units 301 are connected to each other by the second frame 320, and the cell units 301 and the second frame 320 may be rotatably coupled to each other. The second frame 320 may be rotatably coupled to the battery cell at an end of the battery cells 100 provided in the cell unit 301. A distance between the two battery cells 100 coupled to the second frame 320 may be the same as a distance between the battery cells 100 in the first frame 310. Among the connected cell units 301, the first and last cell units may have the second frame 320 coupled to only one end portion, and the cell units therebetween may have the second frame 320 coupled to both end portions. The second frame 320 may be rotatably coupled to both connected cell units 301. Accordingly, the cell units 301 may be connected in a joint-like form by the second frame 320. This connection structure between the cell unit 301 and the second frame 320 may be continuously repeated.

FIG. 11 is a perspective view illustrating a stacking method of the cell units of FIG. 9.

Referring to FIG. 11, in some embodiments, the cell units 301 connected by the second frame 320 may be rotated and stacked. Each cell unit 301 rotates via the second frame 320 and may be stacked in the y-direction. That is, the cell units 301 may be produced in the form illustrated in FIG. 10 and then stacked as illustrated in FIG. 11. In addition, when the cell units 301 are stacked, the protruding portion 314 and the recessed portion 315 interlock, and the battery cells 100 may be naturally disposed in adjacent rows that are staggered, so manufacturing convenience may be improved.

FIG. 12 is a perspective view illustrating a method of coupling the cell unit and the second frame of FIG. 9.

Referring to FIG. 12, in some embodiments, the first frame 310 may comprise the insertion hole 313 into which the battery cell 100 is inserted. The battery cell 100 is inserted into the insertion hole 313, and the outer surface of the battery cell 100 is supported by the first frame 310. Meanwhile, the insertion hole 313 may be at least partially open in a lateral direction. Accordingly, a contact area between the battery cell 100 and the first frame 310 may be minimized, and the cooling efficiency of the battery cell 100 may be improved.

In some embodiments, a plurality of insertion holes 313 may be provided and disposed in a row. Therefore, the battery cells 100 inserted into the insertion holes 313 may form one row. Additionally, the insertion holes 313 are disposed at regular intervals, and the battery cells 100 may be spaced apart at regular intervals in each cell unit 301. In addition, since the battery cells 100 are spaced apart from each other, a short circuit between the battery cells 100 may be prevented, and a space in which a filler can be filled or insulating oil can circulate may be provided between the battery cells 100.

In some embodiments, the second frame 320 may be provided with a pair of coupling portions 321 coupled to the cell units 301. Each of the pair of coupling portions 321 is coupled to a battery cell at the end of the battery cells 100 of the cell unit 301, and the cell units 301 may be connected by the second frame 320. A distance between both battery cells 100 coupled to the pair of coupling portions 321 may be the same as a distance between the battery cells 100 inserted into the insertion holes 313.

Meanwhile, in some embodiments, the coupling portion 321 may be coupled to the battery cell 100 between the upper frame 312 and the lower frame 311. That is, the interval in the z-direction between the upper frame 312 and the lower frame 311 may be kept constant by the coupling portion 321. For example, when insulating oil is accommodated inside the housing 210, a flow path for insulating oil to flow between the upper frame 312 and the lower frame 311 may be kept constant. Therefore, cooling of the battery cells 100 may be performed uniformly in the cell assembly 300, and a temperature difference may be minimized.

In some embodiments, the coupling portion 321 may comprise a coupling hole 322 into which the battery cell 100 is inserted. An interval between the coupling holes 322 may be the same as an interval between the insertion holes 313 of the first frame 310. As illustrated in FIG. 12, after inserting the battery cell 100 into the insertion hole 313 of the lower frame 311 (or upper frame 312), the battery cell at the end may be inserted into the coupling hole 322 of the second frame 320. In addition, by inserting the battery cell 100 into the insertion hole 313 of the upper frame 312 (or lower frame 311), the assembly of the cell units 301 and connection of the cell units 301 by the second frame 320 may be performed at the same time.

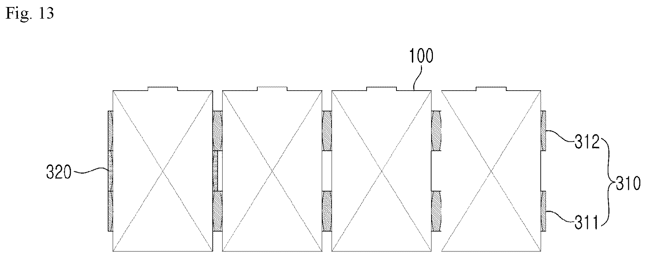

FIG. 13 is a cross-sectional view of a cell unit and a second frame according to another embodiment of the present disclosure.

In some embodiments, the inner side surface of the insertion hole 313 may have a convexly protruding shape. Only the central portion of the convexly protruding inner side surface of the insertion hole 313 may support the battery cell 100, and the remaining portion may not support the battery cell 100. Therefore, a contact area between the first frame 310 and the battery cell 100 may be further reduced, and the cooling efficiency of the battery cell 100 may be improved.

In some embodiments, the battery cell 100 may be press-fitted into the insertion hole 313. The battery cell 100 may be press-fitted into the insertion hole 313 whose inner side surface protrudes convexly. Therefore, the combining of the battery cell 100 and the first frame 310 may be easily performed.

In addition, in some embodiments, the inner side surface of the coupling hole 322 may have a convexly protruding shape. Only the central portion of the convexly protruding inner side surface of the coupling hole 322 may support the battery cell 100, and the remaining portion may not support the battery cell 100. Therefore, a contact area between the second frame 320 and the battery cell 100 may be further reduced, and the cooling efficiency of the battery cell 100 may be improved.

In some embodiments, the battery cell 100 may be press-fitted into the coupling hole 322. The battery cell 100 may be press-fitted into the coupling hole 322 whose inner side surface protrudes convexly. Therefore, the combining of the battery cell 100 and the second frame 320 may be easily performed.

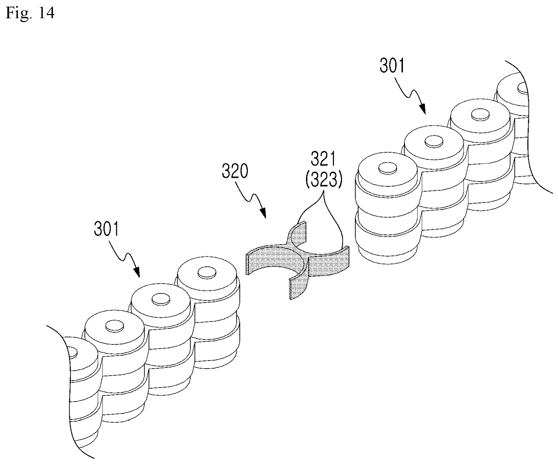

FIG. 14 is a perspective view illustrating a method of coupling a cell unit and a second frame according to still another embodiment of the present disclosure.

In some embodiments, the coupling portions 321 of the second frame 320 may be a pair of elastic pieces 323 supporting the side surface of the battery cell 100. That is, end portions of the pair of elastic pieces 323 are spaced apart from each other, and the battery cells 100 may be inserted therebetween. In addition, the battery cell 100 and the second frame 320 may be coupled by an elastic support force provided by the elastic piece 323. The surface of the battery cell 100 inserted into the coupling portion 321 is exposed between the spaced end portions of the elastic piece 323 and a temperature difference between the battery cells 100 may be minimized. That is, in the case of the battery cell 100 not coupled to the second frame 320, the surface is exposed between the upper frame 312 and the lower frame 311, whereas the battery cell 100 coupled to the second frame 320 is not. In the embodiment in which the second frame 320 illustrated in FIG. 12 comprises the coupling hole 322, the surface of the battery cell 100 coupled to the second frame 320 is exposed only at the upper end portion and the lower end portion, and thus it may be difficult to cool the battery cell compared to other battery cells. On the other hand, in the embodiment in which the second frame 320 illustrated in FIG. 14 comprises the elastic piece 323, since the contact area of the battery cell 100 coupled to the second frame 320 is reduced between the upper frame 312 and the lower frame 311, when the insulating oil is filled inside the housing 210, the contact area between the insulating oil and the battery cell 100 may be increased, cooling efficiency may be improved, and a temperature difference between the battery cells 100 may be minimized.

In addition, in some embodiments, the second frame 320 comprising the elastic piece 323 may be coupled to the battery cell 100 from the side. That is, after the upper frame 312 and the lower frame 311 are combined with the battery cells 100 to form the cell unit 301, the battery cell at the end and the second frame 320 may be coupled.

According to the secondary battery with such a structure, the space utilization rate is increased, thereby improving energy density, reducing the number of components and processes, and improving manufacturing efficiency. In addition, assembly convenience may be improved, and the battery cells may be easily supported and fixed. In addition, the cooling efficiency of the battery cell may be improved. In addition, secondary batteries having various specifications may be easily produced.

Embodiments of the present disclosure can provide a secondary battery.

In addition, some embodiments of the present disclosure can provide a secondary battery to which a cell-to-pack structure is applied.

In addition, some embodiments of the present disclosure can provide a secondary battery with improved assembly convenience.

In addition, some embodiments of the present disclosure can provide a secondary battery with improved cooling efficiency.

Some of the aspects of the present disclosure are as follows:
Aspect 1: A secondary battery (200) comprising: a cell assembly (300) comprising battery cells (100), first and second frames (310, 320) coupled to the battery cells (100), and a case (210) accommodating the battery cells (100) and the first and second frames (310, 320); and a housing (330) in which one or more cell assemblies (330) are accommodated, wherein the battery cells (100) are combined with the first frame (310) to form cell units (301) and the cell units (301) are connected to each other by the second frame (320).
Aspect 2: The secondary battery (200) of aspect 1, wherein the case (330) is provided so that an inner side surface thereof is supported by the first and second frames (310, 320).
Aspect 3: The secondary battery (200) according to any one of the preceding aspects, wherein some of the first frames (310) are lower frames (311) supporting lower portions of the battery cells (100) and the remaining frames are upper frames (312) supporting upper portions of the battery cells (100).
Aspect 4: The second battery (200) according to any one of the preceding aspects, wherein the second frame (320) is coupled to the battery cell (100) between the lower frame (311) and the upper frame (312).
Aspect 5: The secondary battery (200) according to any one of the preceding aspects, wherein an inside of the housing (210) is filled with a filler.
Aspect 6: The secondary battery (200) according to any one of the preceding aspects, wherein insulating oil is accommodated in the housing (210), and the battery cells (100) are immersed in the insulating oil.
Aspect 7: The secondary battery (200) according to any one of the preceding aspects, wherein the cell unit (301) and the second frame (320) are rotatably coupled to each other.
Aspect 8: The secondary battery (200) according to any one of the preceding aspects, wherein the first frame (310) is provided with an insertion hole (313) into which the battery cell (100) is inserted.
Aspect 9: The secondary battery (200) according to any one of the preceding aspects, wherein a plurality of insertion holes (313) are provided and arranged in a row.
Aspect 10: The secondary battery (200) according to any one of the preceding aspects, wherein an inner side surface of the insertion hole (313) has a convexly protruding shape.
Aspect 11: The secondary battery (200) according to any one of the preceding aspects, wherein the battery cell (100) is press-fitted into the insertion hole (313).
Aspect 12: The secondary battery (200) according to any one of the preceding aspects, wherein the second frame (320) is provided with a pair of coupling portions (321) coupled to the cell unit (301).
Aspect 13: The secondary battery (200) according to any one of the preceding aspects, wherein the coupling portion (321) comprises a coupling hole (322) into which the battery cell (100) is inserted.
Aspect 14: The secondary battery (200) according to any one of the preceding aspects, wherein an inner side surface of the coupling hole (322) has a convexly protruding shape.
Aspect 15: The secondary battery (200) according to any one of the preceding aspects, wherein the coupling portions (322) of the second frame (320) are a pair of elastic pieces supporting a side surface of the battery cell (100).

The above description is only an example to which the principle of the present disclosure is applied, and other configurations may be further comprised without departing from the scope of the present disclosure.

## Claims

1. A secondary battery (200) comprising:
a cell assembly (300) comprising battery cells (100), first and second frames (310, 320) coupled to the battery cells (100), and a case (210) accommodating the battery cells (100) and the first and second frames (310, 320); and
a housing (330) in which one or more cell assemblies (330) are accommodated,
wherein the battery cells (100) are combined with the first frame (310) to form cell units (301) and the cell units (301) are connected to each other by the second frame (320).

2. The secondary battery (200) of claim 1, wherein the case (330) is provided so that an inner side surface thereof is supported by the first and second frames (310, 320).

3. The secondary battery (200) according to any one of the preceding claims, wherein some of the first frames (310) are lower frames (311) supporting lower portions of the battery cells (100) and the remaining frames are upper frames (312) supporting upper portions of the battery cells (100).

4. The second battery (200) according to any one of the preceding claims, wherein the second frame (320) is coupled to the battery cell (100) between the lower frame (311) and the upper frame (312).

5. The secondary battery (200) according to any one of the preceding claims, wherein an inside of the housing (210) is filled with a filler.

6. The secondary battery (200) according to any one of the preceding claims, wherein insulating oil is accommodated in the housing (210), and the battery cells (100) are immersed in the insulating oil.

7. The secondary battery (200) according to any one of the preceding claims, wherein the cell unit (301) and the second frame (320) are rotatably coupled to each other.

8. The secondary battery (200) according to any one of the preceding claims, wherein the first frame (310) is provided with an insertion hole (313) into which the battery cell (100) is inserted.

9. The secondary battery (200) according to any one of the preceding claims, wherein a plurality of insertion holes (313) are provided and arranged in a row.

10. The secondary battery (200) according to any one of the preceding claims, wherein an inner side surface of the insertion hole (313) has a convexly protruding shape.

11. The secondary battery (200) according to any one of the preceding claims, wherein the battery cell (100) is press-fitted into the insertion hole (313).

12. The secondary battery (200) according to any one of the preceding claims, wherein the second frame (320) is provided with a pair of coupling portions (321) coupled to the cell unit (301).

13. The secondary battery (200) according to any one of the preceding claims, wherein the coupling portion (321) comprises a coupling hole (322) into which the battery cell (100) is inserted.

14. The secondary battery (200) according to any one of the preceding claims, wherein an inner side surface of the coupling hole (322) has a convexly protruding shape.

15. The secondary battery (200) according to any one of the preceding claims, wherein the coupling portions (322) of the second frame (320) are a pair of elastic pieces supporting a side surface of the battery cell (100).
